# EUROPÄISCHE PATENTSCHRIFT

(11) **EP 1 897 447 B1**
(45) Veröffentlichungstag und Bekanntmachung des Hinweises auf die Patenterteilung: **25.11.2009**
(21) Anmeldenummer: 07017792.8
(22) Anmeldetag: 11.09.2007
(51) Int. Cl.: A22C 11/02

(54) **Füllgelenkvorrichtung für ein fliessfähiges Füllmedium**
Joint filler device for a flowable filling medium
Dispositif articulé de remplissage pour un milieu de remplissage pouvant s'écouler

(30) Priorität: 11.09.2006 DE 102006042544
(43) Veröffentlichungstag der Anmeldung: 12.03.2008
(73) Patentinhaber: Poly-clip System GmbH & Co. KG, 60489 Frankfurt am Main (DE)
(72) Erfinder: Waldstädt, Manfred, 55124 Mainz (DE)
(74) Vertreter: Eisenführ, Speiser & Partner

(56) Entgegenhaltungen:
- DE-B- 1 197 780
- FR-A- 2 780 246
- FR-A- 2 807 922
- US-A1- 2005 053 699
- US-A1- 2006 105 690

## Beschreibung

Die Erfindung betrifft eine Füllgelenkvorrichtung für ein fließfähiges Füllmedium, insbesondere ein Wurstbrät, gemäß dem Oberbegriff des Anspruchs 1.

Insbesondere betrifft die Erfindung eine Füllgelenkvorrichtung, die einen ersten Füllrohrabschnitt mit einer ersten Füllrohrachse sowie einen zweiten Füllrohrabschnitt mit einer zweiten Füllrohrachse aufweist, wobei der zweite Füllrohrabschnitt aus einer Füllstellung, in welcher die zweite Füllrohrachse mit der ersten Füllrohrachse fluchtet, reversibel in eine Abklappstellung verschwenkbar ist, in welcher sich die zweite Füllrohrachse außer Flucht mit der ersten Füllrohrachse befindet. Weiterhin weist die Füllvorrichtung eine Gelenkeinrichtung auf, die füllmediumsdicht zwischen dem ersten sowie dem zweiten Füllrohrabschnitt angeordnet ist, die einen ersten Gelenkaufnahmeabschnitt besitzt, welcher füllmediumsdicht mit dem ersten Füllrohrabschnitt verbunden ist, und die einen Gelenkzwischenabschnitt enthält, der einen dritten Füllrohrabschnitt mit einer dritten Füllrohrachse aufweist und der schwenkbar von dem ersten Gelenkaufnahmeabschnitt in der Weise gehalten wird, dass er reversibel aus der Füllstellung in eine Abklappstellung verschwenkbar ist, in der sich die dritte Füllrohrachse außer Flucht mit der ersten Füllrohrachse befindet.

In der Praxis sind Füllvorrichtungen bekannt, die eine Gelenkeinrichtung enthalten, um einen Abschnitt eines Füllrohres, beispielsweise zum Aufziehen von neuen Darmraupen oder Darmabschnitten aus einer Füllstellung in eine Abklappstellung reversibel herausschwenken zu können (vgl. das Dokument US 2005/053699). Eine weitere derartige bekannte Gelenkeinrichtung ist in Fig. 1 wiedergegeben. Die Gelenkeinrichtung weist dabei einen ersten Füllrohrabschnitt 10 auf, der mit einer nicht näher dargestellten Füllmaschine verbunden ist. Weiterhin ist ein zweiter Füllrohrabschnitt 20 vorgesehen, der mit einer weiteren, in Produktionsrichtung stromabwärts der Füllmaschine vorgesehenen Maschine, beispielsweise einer Verpackungsmaschine, wie einer Wurstclipmaschine, verbunden ist, die ebenfalls nicht näher dargestellt ist. Über einen dritten Füllrohrabschnitt 30 ist der zweite Füllrohrabschnitt 20 mit dem ersten Füllrohrabschnitt 10 verbunden und kann gegenüber dem ersten Füllrohrabschnitt 10 reversibel verschwenkt werden. Der zweite Füllrohrabschnitt 20 ist mittels eines Befestigungselementes 40 starr an dem dritten Füllrohrabschnitt 30 angebracht.

Auf der dem ersten Füllrohrabschnitt 10 zugewandten Seite weist der dritte Füllrohrabschnitt 30 einen halbkugelförmigen Bereich 30a auf, der einen Gelenkzwischenabschnitt bildet. Im Bereich der axialen Mitte des dritten Füllrohrabschnitts 30 ist dieser mit einem Anschlagrand 30b versehen, der in einer zu der Mittelängsachse des dritten Füllrohrabschnitts 30 senkrecht verlaufenden Ebene vollständig umläuft. Der halbkugelförmige Bereich 30a des dritten Füllrohrabschnitts 30 wird von einem kalottenförmigen Bereich 10a des ersten Füllrohrabschnitts 10, der einen ersten Gelenkaufnahmeabschnitt bildet, so umfasst, dass er schwenkbar darin angeordnet ist. An seinem zu dem dritten Füllrohrabschnitt 30 weisenden Ende ist der kalottenförmige Bereich 10a des ersten Füllrohrabschnitts 10 ebenfalls mit einem Anschlagrand 10b versehen, der jeweils über 180° in zwei Ebenen vollständig umläuft, wobei die Ebenen zu der Mittellängsachse des ersten Füllrohrabschnitts 10 senkrecht verlaufen, miteinander aber einen Winkel einschließen.

Befinden sich die Füllrohrabschnitte 10, 20, 30 in der Füllstellung, d.h. sind die Mittellängsachsen der Abschnitte 10, 20, 30 koaxial zueinander ausgerichtet, liegt der in einer der beiden Vertikalebenen sich über 180° erstreckende Anschlagrand 10b des kalottenförmigen Bereichs 10a des ersten Füllrohrabschnitts 10 an dem umlaufenden Anschlagrand 30b des dritten Füllrohrabschnitts 30 an, während der in der anderen Vertikalebene über 180° erstreckende Anschlagrand 10b des ersten Füllrohrabschnitts 10 von dem Anschlagrand 30b des dritten Füllrohrabschnitts beabstandet ist. In der Abklappstellung des zweiten und dritten Füllrohrabschnitts 20, 30 liegt demgegenüber der in der Füllstellung beabstandete Anschlagrand 10b des ersten Füllrohrabschnitts 10 an dem Anschlagrand 30b des dritten Füllrohrabschnitts 30 an.

Da zur sicheren und mediumsdichten Verbindung zwischen dem ersten Füllrohrabschnitt 10 und dem dritten bzw. zweiten Füllrohrabschnitt 30 bzw. 20 eine gewisse Überdeckung der beiden halbkugelförmigen bzw. kalottenförmigen Bereiche 30a, 10a des dritten und ersten Füllrohrabschnitts 30, 10 notwendig ist, besteht bei der bekannten Gelenkeinrichtung der Nachteil, dass der Schwenkwinkel nur verhältnismäßig klein ist. Hierdurch ergibt sich ein eingeschränkter Bewegungsraum für das Aufziehen von Darmraupen, insbesondere bei Verdrängern mit großem Durchlass.

Dieser Nachteil soll mit der vorliegenden Erfindung überwunden werden. Es ist daher Aufgabe der Erfindung, eine Füllgelenkvorrichtung der eingangs genannten Art bereitzustellen, die durch einen großen Schwenkwinkel eine verbesserte Zugänglichkeit gewährleistet.

Die vorstehende Aufgabe wird durch die Merkmale des Anspruchs 1 gelöst. In den sich daran anschließenden Ansprüchen 2 bis 10 finden sich vorteilhafte Ausgestaltungen hierzu.

Durch das Vorsehen eines zweiten Gelenkaufnahmeabschnitts, der füllmediumsdicht mit dem zweiten Füllrohrabschnitt verbunden ist und der zusammen mit dem zweiten Füllrohrabschnitt gegenüber dem Gelenkzwischenabschnitt reversibel aus der Füllstellung über eine Abklappzwischenstellung, in der sich zumindest die dritte Füllrohrachse außer Flucht mit der ersten Füllrohrachse befindet, in eine Abklappendstellung schwenkbar ist, in der sich die zweite Füllrohrachse außer Flucht zu der dritten Füllrohrachse befindet, ist es möglich, den zweiten Füllrohrabschnitt gegenüber dem ersten Füllrohrabschnitt um annähernd den doppelten Schwenkwinkel zu verschwenken, als es mit bisher bekannten Füllrohrgelenkeinrichtungen möglich war, und ohne dass hierdurch die Abdichtung und/oder die Montage zwischen den Füllrohrabschnitten beeinträchtigt wird. Hierdurch ergibt sich eine deutlich erhöhte Bewegungsfreiheit.

Es ist vorteilhaft, wenn der erste und/oder der zweite Gelenkaufnahmeabschnitt zumindest annährend eine kugelkappenförmige Innenkontur besitzen und/oder der Gelenkzwischenabschnitt zumindest annährend die Außenkontur einer Kugel aufweist. Hierdurch wird eine sehr genaue und annähernd spielfreie Führung der Gelenkabschnitte sowie eine vergrößerte Auflagefläche erzielt, die dem Gelenk zusätzliche Stabilität verleiht. Dabei kann vorgesehen sein, dass der Außendurchmesser des ersten Gelenkaufnahmeabschnitts größer ist als der Außendurchmesser des zweiten Gelenkaufnahmeabschnitts.

Durch das Anordnen des dritten Füllrohrabschnitts im Gelenkzwischenabschnitt entsteht im Bereich der Mündungsöffnungen für den dritten Füllrohrabschnitt jeweils eine Abflachung, die ein Verschwenken des Gelenkzwischenabschnitts gegenüber dem ersten und dem zweiten Gelenkaufnahmeabschnitt erleichtert.

Eine am Gelenkzwischenabschnitt im Bereich des ersten und zweiten Gelenkaufnahmeabschnitts angebrachte Dichteinrichtung zum füllmediumsdichten Abschließen des ersten und zweiten Gelenkaufnahmeabschnitts gestattet die Verwendung einfach gehaltener Dichtelemente bzw. einer einfach gestalteter Dichteinrichtung, die sich bei koaxialer Anordnung zur Achse des dritten Füllrohrabschnitts immer zwischen dem Gelenkzwischenabschnitt und dem jeweiligen Gelenkaufnahmeabschnitt befinden bzw. befindet. Dadurch wird eine hohe Dichtwirkung erreicht. Des weiteren gleitet der Rand des Gelenkaufnahmeabschnitts nie über die Dichteinrichtung hinweg, wodurch eine weitere Verschleißminimierung erreicht wird.

Für die Dichteinrichtung kann jede geeignete Ausgestaltung Verwendung finden. Besonders vorteilhaft ist es, wenn die Dichteinrichtung durch mindestens einen O-Ring gebildet wird. Die Verwendung eines O-Rings ermöglicht den Ausgleich kleiner Unebenheiten im Dichtungsbereich, da ein solcher O-Ring im allgemeinen elastisch ist, wodurch eine zuverlässige Abdichtung erreicht wird. Darüber hinaus ist er, im Gegensatz zu fest eingesetzten Dichtungen, bei Verschleiß leicht austauschbar. Die Austauschbarkeit wird weiter vereinfacht, wenn die O-Ringdichtung in einer koaxial zur Füllrohrachse des dritten Füllrohrabschnitts umlaufenden Nut angeordnet wird.

Weiterhin ist es vorteilhaft, wenn die Gelenkeinrichtung eine erste sowie eine zweite Anschlageinrichtung aufweisen, wodurch die Füllstellung und die Abklappendstellung genau definiert ist. Diese beiden Positionen sind genau dann erreicht, wenn in der Füllstellung die erste Anschlageinrichtung in Anlage zu dem ersten und zweiten Gelenkaufnahmeabschnitt und in der Abklappendstellung die zweite Anschlageinrichtung in Anlage zu dem ersten und zweiten Gelenkaufnahmeabschnitt gelangt, so dass eine falsche Positionierung des Füllrohres nahezu ausgeschlossen werden kann. Weiterhin kann vorgesehen sein, dass die zweite Anschlageinrichtung bei Erreichen der Abklappzwischenstellung in Anlage mit dem ersten Gelenkaufnahmeabschnitt gelangt und bei Erreichen der Abklappendstellung in Anlage zu dem ersten und dem zweiten Gelenkaufnahmeabschnitt bringbar ist.

Durch die Verwendung von Bolzen, die die erste und/oder die zweite Anschlageinrichtung bilden und aus dem Gelenkzwischenabschnitt hervorstehen, wird auf einfache und sichere Weise die Anschlagsfunktion erfüllt.

Dabei wird durch eine im wesentlichen diametral gegenüberliegende Anordnung der ersten und der zweiten Anschlageinrichtung an dem Gelenkzwischenabschnitt sowie eine im wesentlichen senkrechte Ausrichtung der Längsachsen der beiden Anschlageinrichtungen zur dritten Füllrohrachse des dritten Füllrohrabschnitts des Gelenkzwischenabschnitts ein annähernd gleichgroßer Schwenkwinkel des ersten Füllrohrabschnitts und des zweiten Füllrohrabschnitts gegenüber dem Gelenkzwischenabschnitt erreicht, wodurch u.a. die Anordnung der Dichtelemente auf dem Gelenkzwischenabschnitt symmetrisch erfolgen kann. Hierbei kann vorgesehen sein, dass die Längsachsen der ersten und zweiten Anschlageinrichtung im wesentlichen senkrecht zur dritten Füllrohrachse des dritten Füllrohrabschnitts des Gelenkzwischenabschnitts verlaufen.

Wenn der erste Gelenkaufnahmeabschnitt und der zweite Gelenkaufnahmeabschnitt jeweils eine Ausnehmung zur Aufnahme der ersten und zweiten Anschlageinrichtung aufweisen, wird ein präziser Anschlag gewährleistet, sowie bei Verschleißerscheinungen am Gelenkdrehpunkt eine zusätzliche Führung und Stabilität geboten.

Weiterhin ist es vorteilhaft, wenn der erste Gelenkaufnahmeabschnitt und der zweite Gelenkaufnahmeabschnitt jeweils einen Rand aufweisen, wobei die beiden Ränder jeweils einen vorzugsweise um 180° in ersten Ebenen umlaufenden ersten Randabschnitt und jeweils einen vorzugsweise über 180° in zweiten Ebenen umlaufenden zweiten Randabschnitt aufweisen, wobei die beiden ersten Randabschnitte und die beiden zweiten Randabschnitte jeweils einander gegenüberliegen und wobei in der Füllstellung die beiden ersten Ebenen der beiden ersten Randabschnitte zumindest annährend parallel zueinander verlaufen und die beiden zweiten Ebenen der zweiten Randabschnitte einen Winkel miteinander einschließen. Im Falle eines solchen Aufbaus der beiden Gelenkaufnahmeabschnitte wird die durch die Gelenkaufnahmeabschnitte umfasste Oberfläche des Gelenkzwischenabschnitts maximal vergrößert, wodurch die Führung der Gelenkabschnitte verbessert und stabilisiert wird.

Der Winkel, den die beiden zweiten Ebenen der zweiten Randabschnitte bilden, entspricht dabei dem Gesamtverschwenkwinkel des zweiten Füllrohrabschnitts gegenüber dem ersten Füllrohrabschnitt, der durch die entsprechende Gestaltung der Gelenkaufnahmeabschnitte sehr genau wählbar ist.

Weiterhin kann ein Drehgelenk vorgesehen sein, dessen Drehgelenkachse vorzugsweise im wesentlichen senkrecht zur der dritten Füllrohrachse des dritten Füllrohrabschnitts verläuft. Hierdurch wird im Zusammenspiel mit den entsprechend angeordneten ersten und zweiten Anschlageinrichtungen sowie den ersten und zweiten Randabschnitten ein maximaler Ausschwenkwinkel erreicht.

Eine an der Füllvorrichtung vorgesehene Halteeinrichtung, die den zweiten Füllrohrabschnitt und/oder den Gelenkzwischenabschnitt abstützt und/oder gegen den ersten Füllrohrabschnitt verschwenkt, verleiht der Füllvorrichtung die notwendige Stabilität und ermöglicht ein maschinelles Ausschwenken des zweiten Füllrohrabschnitts aus der Füllstellung in die Abklappendstellung.

Es ist noch anzumerken, dass die vorstehend in ihren Grundprinzipien und ihren vorteilhaften Ausgestaltungen beschriebene Gelenkeinrichtung nicht nur bei einer Füllvorrichtung sondern auch bei anderen Vorrichtungen Verwendung finden kann. Daher kann auch die Gelenkeinrichtung eine selbstständige Erfindung darstellen.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigt:

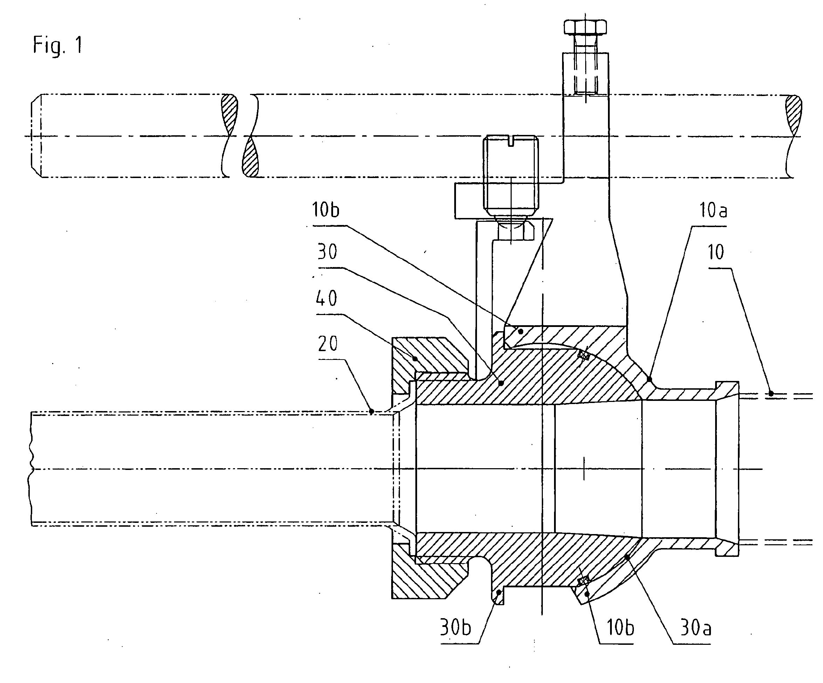

- Fig.1:: eine Schnittdarstellung senkrecht zur Schwenkebene durch eine Füllvorrichtung gemäß dem Stand der Technik mit einer bekannten Gelenkeinrichtung;
- Fig.2:: eine Seitenansicht in der Schwenkebene auf eine erfindungsgemäße Füllgelenkvorrichtung mit einer Gelenkeinrichtung in einer Abklappstellung;
- Fig.3:: eine Schnittdarstellung in der Schwenkebene durch eine erfindungsgemäße Füllgelenkvorrichtung mit der Gelenkeinrichtung in der Abklappstellung;
- Fig.4:: eine Schnittdarstellung in der Schwenkebene durch eine erfindungsgemäße Füllgelenkvorrichtung mit der Gelenkeinrichtung in der Füllstellung.

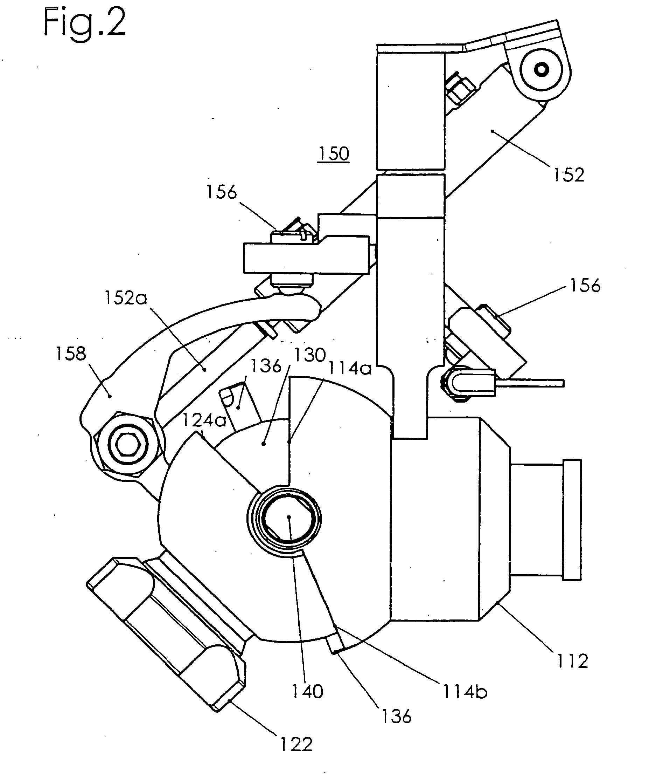

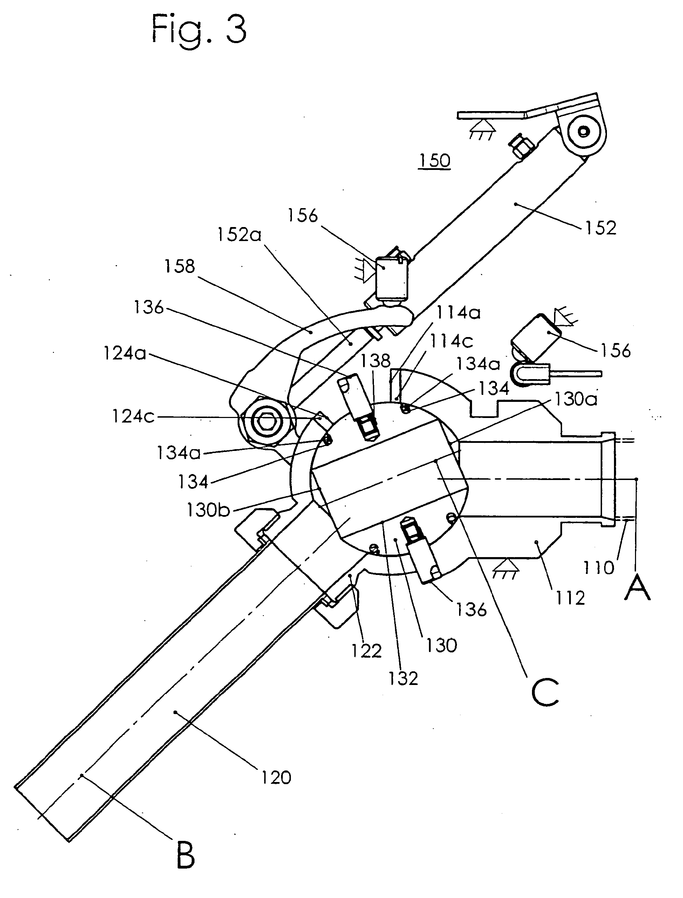

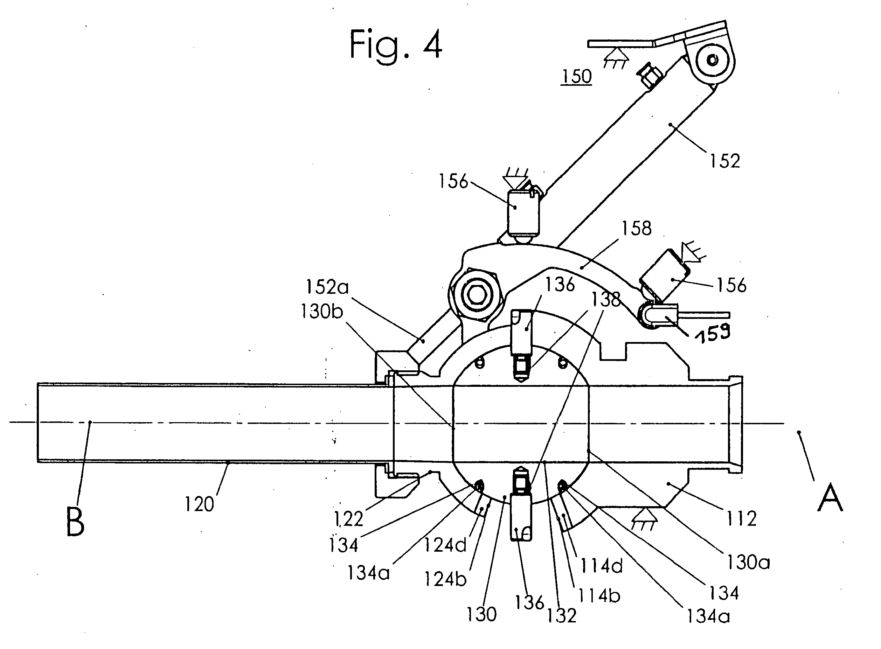

In den Fig. 2 bis 4 ist eine erfindungsgemäße Füllgelenkvorrichtung wiedergegeben. Die Füllgelenkvorrichtung enthält einen ersten Füllrohrabschnitt 110 aus vorzugsweise nicht rostendem Stahl, der mit einer nicht näher dargestellten Füllmaschine verbunden ist. Weiterhin ist ein zweiter Füllrohrabschnitt 120 aus ebenfalls vorzugsweise nicht rostendem Stahl vorgesehen, der mit einer in Produktionsrichtung stromabwärts der Füllmaschine angeordneten, ebenfalls nicht näher dargestellten Verpackungsmaschine, wie einer Wurstclipmaschine, verbunden ist. Der erste und der zweite Füllrohrabschnitt 110, 120 besitzen jeweils einen kreisringförmigen Querschnitt mit je einer Mittellängsachse A, B, die in der Füllstellung der Füllrohrabschnitte 110, 120 koaxial zueinander verlaufen (vgl. Fig. 4).

An dem zu dem zweiten Füllrohrabschnitt 120 weisenden Ende des ersten Füllrohrabschnitts 110 ist an diesem ein erster Gelenkaufnahmeabschnitt 112 und an dem zu dem ersten Füllrohrabschnitt 110 weisenden Ende des zweiten Füllrohrabschnitts 120 ein zweiter Gelenkaufnahmeabschnitt 122 angeordnet. Beide Gelenkaufnahmeabschnitte 112, 122 sind jeweils starr, aber demontierbar, beispielsweise über einen Gewindeeingriff an dem jeweiligen Füllrohrabschnitt 110, 120 angebracht. Die beiden Gelenkaufnahmeabschnitte 110, 120 sind in ihrer Außen- und Innenkontur jeweils kugelkappenförmig ausgestaltet, wobei ihr Außendurchmesser jeweils größer ist als der Außendurchmesser des ersten bzw. zweiten Füllrohrabschnitts 110, 120 und der Außendurchmesser des ersten Gelenkaufnahmeabschnitts 112 größer ist als der Außendurchmesser des zweiten Gelenkaufnahmeabschnitts 122. Die Innenkonturen der beiden Gelenkaufnahmeabschnitte 112, 122, insbesondere die Kugelkappen sind zumindest annährend gleich.

Der erste Gelenkaufnahmeabschnitt 112 besitzt an seinem zu dem zweiten Gelenkaufnahmeabschnitt 122 weisenden Ende eine erste Anschlageinrichtung 114, die einen ersten und einen zweiten Anschlagrandabschnitt 114a, 114b aufweist. Die beiden Anschlagrandabschnitte 114a, 114b erstrecken sich in Umfangsrichtung des ersten Gelenkaufnahmeabschnitts 112 jeweils über zumindest annährend 180° in zwei Ebenen, die zu der Mittellängsachse A des ersten Füllrohrabschnitts 110 senkrecht verlaufen, miteinander aber einen Winkel einschließen, wie dies aus den Fig. 2 bis 4 entnehmbar ist.

Ebenso weist der zweite Gelenkaufnahmeabschnitt 122 an seinem zu dem ersten Gelenkaufnahmeabschnitt 112 weisenden Ende eine zweite Anschlageinrichtung 124 auf, die einen ersten und einen zweiten Anschlagrandabschnitt 124a, 124b enthält. Die beiden Anschlagrandabschnitte 124a, 124b erstrecken sich in Umfangsrichtung des zweiten Gelenkaufnahmeabschnitts 122 jeweils über zumindest annährend 180° in zwei Ebenen, die zu der Mittellängsachse B des zweiten Füllrohrabschnitts 120 senkrecht verlaufen, miteinander aber einen Winkel einschließen, wie dies aus den Fig. 2 bis 4 entnehmbar ist. An zwei zumindest annährend über 180° gegenüberliegenden Stellen sind der erste sowie der zweite Anschlagrandabschnitt 114a, 114b des ersten Gelenkaufnahmeabschnitts 112 und der erste sowie der zweite Anschlagrandabschnitt 124a, 124b des zweiten Gelenkaufnahmeabschnitts 122 mit einer zumindest annährend halbzylindrischen Ausnehmung 114c, 114d bzw. 124c, 124d versehen, deren Zweck nachstehend noch näher erläutert wird.

Zwischen dem ersten und dem zweiten Füllrohrabschnitt 110, 120, insbesondere zwischen dem ersten und dem zweiten Gelenkaufnahmeabschnitt 112, 122 ist ein Gelenkzwischenabschnitt 130 vorzugsweise ebenfalls aus nicht rostendem Stahl vorgesehen. Der Gelenkzwischenabschnitt 130 besitzt als Außenkontur die Form einer Kugel mit zwei zumindest annährend diametral gegenüberliegenden Abflachungen 130a, 130b. Die beiden Abflachungen 130a, 130b werden durch einen Rohrabschnitt 132 gebildet, der sich im Inneren des Gelenkzwischenabschnitts 130 linear entlang seiner Mittellängsachse C erstreckt. Der Innendurchmesser des Rohrabschnitts 132, der einen dritten Füllrohrabschnitt bildet, entspricht dabei zumindest annährend dem Innendurchmesser des ersten und des zweiten Füllrohrabschnitts 110, 120. Weiterhin entspricht der Außendurchmesser des kugelförmigen Gelenkzwischenabschnitts 130 zumindest annährend dem Innendurchmesser der beiden kugelkappenförmigen Gelenkaufnahmeabschnitte 112, 122 des ersten und des zweiten Füllrohrabschnitts 110, 120.

Von den beiden Abflachungen 130a, 130b sowie dem Mittelpunkt des kugelförmigen Gelenkzwischenabschnitts 130 zumindest annährend gleichmäßig beabstandet sind zwei um 360° vollständig und koaxial zur Mittellängsachse C des Gelenkzwischenabschnitts 130 umlaufende Nuten 134 vorgesehen. In jede der beiden Nuten ist jeweils ein O-Ring 134a eingesetzt. Die beiden O-Ringe 134a bilden eine mediumsdichte Abdichtung zwischen der Außenumfangsfläche des Gelenkzwischenabschnitts 130 und den Innenumfangsflächen der beiden Gelenkaufnahmeabschnitte 112, 122.

Weiterhin ist der Gelenkzwischenabschnitt 130 in einer senkrecht zu seiner Mittellängsachse C verlaufenden Ebene mit zwei vorzugsweise aus Stahl hergestellten und diametral einander gegenüberliegenden Gewindebolzen 136 versehen. Die beiden zylinderförmigen und den gleichen Außendurchmesser aufweisende Gewindebolzen 136 sind in zwei Sacklochbohrungen 138 in der Weise mit ihren jeweiligen, nicht näher bezeichneten Gewindeabschnitt eingeschraubt, dass sie über die Außenumfangsfläche des Gelenkzwischenabschnitts 130 gleich weit hervorstehen. Die beiden Gewindebolzen 136 dienen als erste und zweite Anschlageinrichtung. Dabei gelangen sie in Kontakt mit den halbzylindrischen Ausnehmungen 114c, 114d bzw. 124c, 124d des ersten und zweiten Gelenkaufnahmeabschnitts 112, 122, wie dies nachstehend noch näher erläutert wird. Daher entsprechen die Innendurchmesser der halbzylindrischen Ausnehmungen 114c, 114d bzw. 124c, 124d des ersten und zweiten Gelenkaufnahmeabschnitts 112, 122 zumindest annährend den Außendurchmessern der Gewindebolzen 136.

Zwischen dem ersten und dem zweiten Gelenkaufnahmeabschnitt 112, 122 ist weiterhin eine Schwenkachse 140 vorgesehen. Die Schwenkachse 140 verläuft sowohl senkrecht zu der Mittellängsachse C des Gelenkzwischenabschnitts wie auch senkrecht zur Achse der beiden Gewindebolzen 136 und ebenfalls durch deren gemeinsamen Schnittpunkt.

Des weiteren besitzt die erfindungsgemäße Füllvorrichtung eine Halteeinrichtung 150, die zum Halten und Verschwenken der Gelenkaufnahmeabschnitte 112, 122 sowie zum Erkennen der jeweiligen Position des zweiten Füllrohrabschnitts 120 dient. Hierzu ist die Halteeinrichtung 150 mit einem hydraulischen oder pneumatischen Zylinder 152 versehen, der mit seiner Kolbenstange 152a an dem zweiten Gelenkaufnahmeabschnitt 122 angelenkt ist. Durch Aus- und Einfahren der Kolbenstange 152a kann der zweite Gelenkaufnahmeabschnitt 122 mit dem zweiten Füllrohrabschnitt 120 aus einer Füllstellung über eine Abklappzwischenstellung in eine Abklappendstellung reversibel verfahren werden. Zur Überwachung des Erreichens der beiden Endstellungen sind zwei Sensoren 156 vorgesehen, die über ein Stellglied 158, das mit der Kolbenstange 152 fest verbunden ist, betätigt werden, wie dies nachstehend erläutert wird.

Die Betätigung der erfindungsgemäßen Füllgelenkvorrichtung wird wie folgt durchgeführt:

In der Befüllstellung, wie sie in Fig. 4 dargestellt ist, sind die Achsen A, B, C der Füllrohrabschnitte 110, 120, 132 koaxial zueinander ausgerichtet. Die Kolbenstange 152a ist maximal in den Zylinder 152 eingefahren und ein Sensor 156 ist in eine Ausnehmung am rechten Ende des Stellglieds 158 eingerastet und markiert damit die Füllstellung. Die ersten Anschlagrandabschnitt 114a, 124a der ersten und zweiten Anschlageinrichtungen 114, 124 sind in Anlage zueinander und ihre zylindrische Ausnehmungen 114c, 124c umgreifen den Gewindebolzen 136, während die zweiten Anschlagrandabschnitt 114b, 124b der ersten und zweiten Anschlageinrichtungen 114, 124 voneinander und vom zweiten Gewindebolzen 136 maximal beabstandet sind. In dieser Position bilden die Rohrabschnitte 110, 120, 132 ein durchgehendes Rohr, durch das das Füllgut problemlos transportiert werden kann.

Soll nun der zweite Füllrohrabschnitt 120 aus der Füllstellung geschwenkt werden, wird die Kolbenstange 152a aus dem Zylinder 152 gefahren. Diese drückt auf den zweiten Gelenkaufnahmeabschnitt 122, wodurch sich der zweite Füllrohrabschnitt 120 in der Darstellung der Fig. 4 nach unten neigt, da er mit dem zweiten Gelenkaufnahmeabschnitt 122 fest verbunden ist. Der dreht sich um die Drehachse 140, wobei er durch seine kugelkappenförmige Gestaltung und die annähernd kugelige Gestalt des Gelenkzwischenabschnitts 130 auf diesem entlang gleitet. Dabei verliert der erste Anschlagrandabschnitt 124a der zweiten Anschlageinrichtung 124 seine Anlage sowohl an den ersten Anschlagrandabschnitt 114a der ersten Anschlageinrichtung 114, wie auch an den Bolzen 136. Während dessen nähert sich der zweite Anschlagrandabschnitt 124b der zweiten Anschlageinrichtung 124 dem zweiten Bolzen 136 und umgreift ihn mit seiner zylindrischen Ausnehmung 124d.

Die so erreichte Position wird als Abklappzwischenstellung bezeichnet und ist dadurch gekennzeichnet, dass der obere Gewindebolzen 136 noch in der Ausnehmung 114c des ersten Anschlagrandabschnitts 114a der ersten Anschlageinrichtung 114 anliegt, während die Ausnehmung 124d des zweiten Anschlagrandabschnitts 124b den unteren Bolzen 136 bereits umgreift. Die Achsen A, C des ersten und dritten Füllrohrabschnitts 110, 132 fluchten, während die Achse B des zweiten Füllrohrabschnitts 120 aus dieser Flucht geschwenkt ist.

Durch weiteres Herausfahren der Kolbenstange 152a aus dem Zylinder 152 kann der zweite Füllrohrabschnitt 120 weiter aus der Förderlinie geschwenkt werden. Da der zweite Gelenkaufnahmeabschnitt 122 mit der zylindrischen Ausnehmung 124d des zweiten Anschlagrandabschnitts 124b der zweiten Anschlageinrichtung 124 den unteren Bolzen 136 umgreift, wird bei weiterem Schwenken des zweiten Füllrohrabschnitts 120 nun der Gelenkzwischenabschnitt 130 um die Drehachse 140 gedreht. Dabei nähert sich der zweite Anschlagrandabschnitt 124b der zweiten Anschlageinrichtung 124 zusammen mit dem unteren Bolzen 136 dem zweiten Anschlagrandabschnitt 114b der zweiten Anschlageinrichtung 114, bis diese in Anlage kommen und der Bolzen 136 von den beiden zylindrischen Ausnehmungen 114d, 124d umschlossen ist. Während dessen entfernt sich der obere Bolzen 136 aus der Ausnehmung 114c des ersten Anschlagrandabschnitts 114a, wobei sein Abstand zur Ausnehmung 124c des ersten Anschlagrandabschnitts 124a konstant bleibt.

Die so erreichte Position ist die Abklappendstellung. In dieser Stellung ist auch die Achse C des dritten Füllrohrabschnitts 132 aus der Flucht der Achse A des ersten Füllrohrabschnitts 120 geschwenkt. Der Winkel zwischen den Achsen B, C des zweiten und dritten Füllrohrabschnitts 120, 132 ist nach Erreichen der Abklappzwischenstellung konstant geblieben. Der Schwenkwinkel des zweiten Füllrohrabschnitts 120 gegenüber dem ersten Füllrohrabschnitt 110 ist jetzt maximal. In dieser Position kann eine neue Darmraupe oder ein neuer Darmabschnitt auf das Füllrohr aufgezogen werden.

Die kugelige Gestaltung des Gelenkzwischenabschnitts 130 ermöglicht, dass die koaxial um den Gelenkzwischenabschnitt 130 umlaufende Anordnung der Nuten 134, in die z.B. O-Ringdichtungen 134a eingelegt werden können. Durch die kugelkappenförmige Gestaltung des ersten und zweiten Gelenkaufnahmeabschnitts 112, 122 gleiten diese während des gesamten Schwenkvorgangs über die Dichteinrichtungen 134a hinweg, ohne sie freizugeben. Dadurch wird eine ununterbrochene Abdichtung zwischen den Gelenkaufnahmeabschnitten 112, 122 und dem Gelenkzwischenabschnitt 130 gewährleistet.

Des Weiteren verlässt die Ausnehmung am rechten Ende des Stellgliedes 158 zu Beginn des Schwenkvorgangs den rechten Rastbolzen 156, wodurch dieser freigegeben wird. Bei Erreichen der Abklappendstellung rastet die Ausnehmung in den linken Rastbolzen 156 ein.

Die Vorgänge beim Wiedereinschwenken des zweiten Füllrohrabschnitts 120 in die Füllstellung erfolgen entsprechend der obigen Beschreibung des Ausschwenkens in umgekehrter Reihenfolge. Ein Sensor 159 zeigt die Endstellung an.

Abschließend ist noch zu bemerken, dass die Erfindung nicht auf die in den Fig. 2 bis 4 dargestellte Ausführungsform begrenzt ist. Als Dichtelemente können beispielsweise andere als die erwähnten O-Ringdichtungen verwendet werden. Auch kann als Antrieb zum Ausschwenken ein anderer als der dargestellte Zylinder verwendet werden, z.B. ein Motor mit einem entsprechenden Getriebe.

### Bezugszeichenliste

- A: Mittellängsachse des ersten Füllrohrabschnitts
- B: Mittellängsachse des zweiten Füllrohrabschnitts
- C: Mittellängsachse des dritten Füllrohrabschnitts
- 10/110: erster Füllrohrabschnitt
- 10a/112: erster Gelenkaufnahmeabschnitt
- 114: erste Anschlageinrichtung
- 114a: erster Anschlagrandabschnitt der ersten Anschlageinrichtung
- 114b: zweiter Anschlagrandabschnitt der ersten Anschlageinrichtung
- 114c: zylindrische Ausnehmung am ersten Anschlagrandabschnitt
- 114d: zylindrische Ausnehmung am zweiten Anschlagrandabschnitt
- 20/120: zweiter Füllrohrabschnitt
- 122: zweiter Gelenkaufnahmeabschnitt
- 124: zweite Anschlageinrichtung
- 124a: erster Anschlagrandabschnitt der zweiten Anschlageinrichtung
- 124b: zweiter Anschlagrandabschnitt der zweiten Anschlageinrichtung
- 124c: zylindrische Ausnehmung am ersten Anschlagrandabschnitt
- 124d: zylindrische Ausnehmung am zweiten Anschlagrandabschnitt
- 30/130: Zwischengelenkabschnitt
- 130a: Abflachung
- 130b: Abflachung
- 132: dritter Füllrohrabschnitt
- 134: Nut
- 134a: Dichtungseinrichtung
- 136: Gewindebolzen
- 138: Sacklochbohrung
- 140: Schwenkachse
- 150: Haltevorrichtung
- 152: pneumatischer/hydraulischer Zylinder
- 152a: Kolbenstange
- 156: Rastbolzen
- 158: Stellglied
- 159: Sensor

## Patentansprüche

1. Füllgelenkvorrichtung für ein fließfähiges Füllmedium, insbesondere für ein Wurstbrät, enthaltend einen ersten Füllrohrabschnitt (110) mit einer ersten Füllrohrachse (A) sowie einen zweiten Füllrohrabschnitt (120) mit einer zweiten Füllrohrachse (B), wobei der zweite Füllrohrabschnitt (120) aus einer Füllstellung, in welcher die zweite Füllrohrachse (B) mit der ersten Füllrohrachse (A) fluchtet, reversibel in eine Abklappstellung verschwenkbar ist, in welcher sich die zweite Füllrohrachse (B) außer Flucht mit der ersten Füllrohrachse (A) befindet, und weiter enthaltend eine Gelenkeinrichtung, die füllmediumsdicht zwischen dem ersten sowie dem zweiten Füllrohrabschnitt (110, 120) angeordnet ist, die einen ersten Gelenkaufnahmeabschnitt (112) aufweist, welcher füllmediumsdicht mit dem ersten Füllrohrabschnitt (110) verbunden ist, und die einen Gelenkzwischenabschnitt (130) enthält, der einen dritten Füllrohrabschnitt (132) mit einer dritten Füllrohrachse (C) besitzt, und der schwenkbar von dem ersten Gelenkaufnahmeabschnitt (112) in der Weise gehalten wird, dass er reversibel aus der Füllstellung in eine Abklappstellung verschwenkbar ist, in der sich die dritte Füllrohrachse (C) außer Flucht mit der ersten Füllrohrachse (A) befindet,
**dadurch gekennzeichnet, dass** ein zweiter Gelenkaufnahmeabschnitt (122) vorgesehen ist, der füllmediumsdicht mit dem zweiten Füllrohrabschnitt (120) verbunden ist und der zusammen mit dem zweiten Füllrohrabschnitt (120) gegenüber dem Gelenkzwischenabschnitt (130) reversibel aus der Füllstellung über eine Abklappzwischenstellung, in der sich zumindest die dritte Füllrohrachse (C) außer Flucht mit der ersten Füllrohrachse (A) befindet, in eine Abklappendstellung schwenkbar ist, in der sich die zweite Füllrohrachse (B) außer Flucht zu der dritten Füllrohrachse (C) befindet.

2. Füllgelenkvorrichtung nach Anspruch 1,
**dadurch gekennzeichnet, dass** der erste Gelenkaufnahmeabschnitt (112) und/oder der zweite Gelenkaufnahmeabschnitt (122) zumindest annährend eine kugelkappenförmige Innenkontur aufweisen.

3. Füllgelenkvorrichtung nach Anspruch 1 oder 2,
**dadurch gekennzeichnet, dass** der Gelenkzwischenabschnitt (130) zumindest annährend eine Außenkontur in Form einer Kugel aufweist.

4. Füllgelenkvorrichtung nach einem der Ansprüche 1 bis 3,
**dadurch gekennzeichnet, dass** der Gelenkzwischenabschnitt (130) im Bereich des ersten und zweiten Gelenkaufnahmeabschnitts (112, 122) eine Dichteinrichtung (134a) zum füllmediumsdichten Abschließen des ersten und zweiten Gelenkaufnahmeabschnitts (112, 122) aufweist.

5. Füllgelenkvorrichtung nach einem der Ansprüche 1 bis 4,
**dadurch gekennzeichnet, dass** die Gelenkeinrichtung eine erste sowie eine zweite Anschlageinrichtung (114, 124) aufweist.

6. Füllgelenkvorrichtung nach Anspruch 5,
**dadurch gekennzeichnet, dass** die erste Anschlageinrichtung (114) in der Füllstellung in Anlage zu dem ersten und zweiten Gelenkaufnahmeabschnitt (112, 122) und die zweite Anschlageinrichtung (124) in der Abklappendstellung in Anlage zu dem ersten und zweiten Gelenkaufnahmeabschnitt (112, 122) gelangt.

7. Füllgelenkvorrichtung nach Anspruch 5 oder 6,
**dadurch gekennzeichnet, dass** die zweite Anschlageinrichtung (124) bei Erreichen der Abklappzwischenstellung in Anlage mit dem ersten Gelenkaufnahmeabschnitt (112) gelangt und bei Erreichen der Abklappendstellung in Anlage zu dem ersten und dem zweiten Gelenkaufnahmeabschnitt (112, 122) bringbar ist.

8. Füllgelenkvorrichtung nach einem der Ansprüche 1 bis 7,
**dadurch gekennzeichnet, dass** der erste Gelenkaufnahmeabschnitt (112) und der zweite Gelenkaufnahmeabschnitt (122) jeweils einen Rand aufweisen, wobei die beiden Ränder jeweils einen vorzugsweise um 180° in ersten Ebenen umlaufenden ersten Randabschnitt (114a, 124a) und jeweils einen vorzugsweise über 180° in zweiten Ebenen umlaufenden zweiten Randabschnitt (114b, 124b) aufweisen, wobei die beiden ersten Randabschnitte (114a, 124a) und die beiden zweiten Randabschnitte (114b, 124b) jeweils einander gegenüberliegen und wobei in der Füllstellung die beiden ersten Ebenen der beiden ersten Randabschnitte (114a, 124a) zumindest annährend parallel zueinander verlaufen und die beiden zweiten Ebenen der zweiten Randabschnitte (114b, 124b) einen Winkel miteinander einschließen.

9. Füllgelenkvorrichtung nach Anspruch 8,
**dadurch gekennzeichnet, dass** der Winkel zwischen den beiden zweiten Ebenen der zweiten Randabschnitte (114b, 124b) den Gesamtverschwenkwinkel des zweiten Füllrohrabschnitts (120) gegenüber dem ersten Füllrohrabschnitt (110) definiert.

10. Füllgelenkvorrichtung nach einem der Ansprüche 1 bis 9,
**dadurch gekennzeichnet, dass** ein Drehgelenk vorgesehen ist, dessen Drehgelenkachse (140) vorzugsweise im wesentlichen senkrecht zur der dritten Füllrohrachse (C) des dritten Füllrohrabschnitts (132) verläuft.

## Claims

1. Joint filling device for a pourable medium, in particular for a sausage meat, comprising a first filling pipe section (110) having a first filling pipe axis (A) and a second filling pipe section (120) having a second filling pipe axis (B), wherein the second filling pipe section (120) is reversibly rotatable from a filling position in which the second filling pipe axis (B) is aligned with the first filling pipe axis (A) to a hinge away position in which the second filling pipe axis (B) is not aligned with the first filling pipe axis (A), further comprising a joint mechanism that is positioned between the first and the second filling pipe sections (110, 120) in a filling medium tight manner, has a first joint receiver section (112) connected to the first filling pipe section (110) in a filling medium tight manner, and includes a joint intermediate section (130) comprising a third filling pipe section (132) having a third filling pipe axis (C), and being hold in a pivotable manner by the first joint receiver section (112) in such a manner that it is reversibly rotatable from a filling position to a hinge away position in which the third filling pipe axis (C) is not aligned with the first filling pipe axis (A),
**characterized in that** a second joint receiver section (122) is provided which is coupled to the second filling pipe section (120) in a filling medium tight manner and is reversibly rotatable together with the second filling pipe section (120) relatively to the joint intermediate section (130) from the filling position via a hinge away intermediate position in which at least the third filling pipe axis (C) is not aligned with the first filling pipe axis (A) to a hinge away end position in which the second filling pipe axis (B) is not aligned with the third filling pipe axis (C).

2. Joint filling device according to claim 1,
**characterized in that** the first joint receiver section (112) and/or the second joint receiver section (122) have at least approximately a spherical cap like inner contour.

3. Joint filling device according to claim 1 or 2,
**characterized in that** the joint intermediate section (130) has an outer contour at least approximately in form of a sphere.

4. Joint filling device according to any one of the claims 1 to 3,
**characterized in that** the joint intermediate section (130) has a sealing means (134a) in the region of the first and second joint receiver sections (112, 122) for sealing the first and second joint receiver sections (112, 122) in a filling medium tight manner.

5. Joint filling device according to any one of the claims 1 to 4,
**characterized in that** the joint mechanism has a first and a second stopper means (114, 124).

6. Joint filling device according to claim 5,
**characterized in that** in the filling position the first stopper means (114) abuts on the first and second joint receiver sections (112, 122), and in the hinge away end position the second stopper means (124) abuts on the first and second joint receiver sections (112, 122).

7. Joint filling device according to claim 5 or 6,
**characterized in that** the second stopper means (124) abuts on the first joint receiver section (112) when arriving at the hinge away intermediate position, and is able to be caused to abut on the first and second joint receiver sections (112, 122) when arriving at the hinge away end position.

8. Joint filling device according to any one of the claims 1 to 7,
**characterized in that** the first joint receiver section (112) and the second joint receiver section (122) respectively have a border, wherein the borders have a respective first border section (114a, 124a) preferably circulating around 180° in first planes and a respective second border section (114b, 124b) preferably circulating around 180° in second planes, wherein both border sections (114a, 124a) and both border sections (114b, 124b) respectively face each other, and wherein both first planes of both first border section (114a, 124a) extend at least approximately parallel to each other in the filling position, and both second planes of both second border sections (114b, 124b) together enclose an angle.

9. Joint filling device according to claim 8,
**characterized in that** the angle between both second planes of the second border sections (114b, 124b) defines the total rotation angle of the second filling pipe section (120) relative to the first filling pipe section (110).

10. Joint filling device according to any one of the claims 1 to 9,
**characterized in that** a pivot joint is provided, the pivot joint axis (140) of which preferably extends substantially perpendicular to the third filling pipe axis (C) of the third filling pipe section (132).

## Revendications

1. Dispositif articulé de remplissage pour un milieu de remplissage susceptible de s'écouler, notamment pour de la chair à saucisse, comprenant une première partie (110) tubulaire de remplissage ayant un premier axe (A) de tube de remplissage, ainsi qu'une deuxième partie (120) tubulaire de remplissage ayant un deuxième axe (B) de tube de remplissage, la deuxième partie (120) tubulaire de remplissage pouvant pivoter d'une position de remplissage, dans laquelle le deuxième axe (B) de tube de remplissage est aligné avec le premier axe (A) de tube de remplissage de manière réversible, à une position rabattue, dans laquelle le deuxième axe (B) de tube de remplissage n'est pas aligné avec le premier axe (B) de tube de remplissage, et comprenant en outre un dispositif articulé disposé d'une manière étanche au milieu de remplissage entre la première ainsi que la deuxième partie (110, 120) tubulaire de remplissage et ayant une première partie (112) de réception d'articulation, qui est reliée, d'une manière étanche au milieu de remplissage, à la première partie (110) tubulaire de remplissage et qui comporte une partie (130) intermédiaire d'articulation, qui a une troisième partie (132) tubulaire de remplissage ayant un troisième axe (C) de tube de remplissage et qui est maintenue pivotante par la première partie (112) de réception d'articulation de façon à pouvoir pivoter réversiblement de la position de remplissage à une position rabattue dans laquelle le troisième axe (C) de tube de remplissage n'est pas aligné avec le premier axe (A) de tube de remplissage, **caractérisé en ce qu'**il est prévu une deuxième partie (122) de réception d'articulation, qui est reliée, d'une manière étanche au milieu de remplissage, à la deuxième partie (120) tubulaire de remplissage et qui ensemble avec la deuxième partie (120) tubulaire de remplissage peut pivoter par rapport à la partie (130) intermédiaire d'articulation réversiblement de la position de remplissage en passant par une position intermédiaire rabattue dans laquelle au moins le troisième axe (C) de tube de remplissage n'est pas aligné avec le premier axe (A) de tube de remplissage, à une position rabattue dans laquelle le deuxième axe (B) de tube de remplissage n'est pas aligné avec le troisième axe (C) de tube de remplissage.

2. Dispositif articulé de remplissage suivant la revendication 1,
**caractérisé en ce que** la première partie (112) de réception articulée et/ou la deuxième partie (122) de réception articulée ont au moins à peu près un contour intérieur en forme de calotte sphérique.

3. Dispositif articulé de remplissage suivant la revendication 1 ou 2,
**caractérisé en ce que**, la partie (130) intermédiaire articulée a au moins à peu près un contour extérieur en forme de sphère.

4. Dispositif articulé de remplissage suivant l'une des revendications 1 à 3,
**caractérisé en ce que** la partie (130) intermédiaire articulée a, dans la zone de la première et de la deuxième partie (112, 122) de réception articulée, un dispositif (134a) d'étanchéité pour fermer d'une manière étanche au milieu de remplissage la première et la deuxième partie (112, 122) de réception articulée.

5. Dispositif articulé de remplissage suivant l'une des revendications 1 à 4,
**caractérisé en ce que**, le dispositif articulé à un premier ainsi qu'un deuxième dispositif (114, 124) de butée.

6. Dispositif articulé de remplissage suivant la revendication 5,
**caractérisé en ce que** le premier dispositif (114) de butée arrive dans la position de remplissage en contact avec la première et la deuxième partie (112, 122) de réception articulée et le deuxième dispositif (124) de butée arrive dans la position rabattue en contact avec la première et la deuxième partie (112, 122) de réception articulée.

7. Dispositif articulé de remplissage suivant la revendication 5 ou 6,
**caractérisé en ce que** le deuxième dispositif (124) de butée arrive, lorsque est atteinte la position intermédiaire rabattue, en contact avec la première partie (112) de réception articulée et peut être mis, lorsque est atteinte la position rabattue, en contact avec la première et la deuxième partie (112, 122) de réception articulée.

8. Dispositif articulé de remplissage suivant l'une des revendications 1 à 7,
**caractérisé en ce que** la première partie (112) de réception articulée et la deuxième partie (122) de réception articulée ont respectivement un bord, les deux bords ayant respectivement une première partie (114a, 124a) de bord faisant le tour dans un premier plan de préférence sur 180° et respectivement une deuxième partie (114b, 124b) de bord faisant le tour dans un deuxième plan respectivement de préférence sur 180°, les deux premières parties (114a, 124a) de bord et les deux deuxièmes parties (114b, 124b) de bord étant respectivement opposées l'une à l'autre et, dans la position de remplissage, les deux premiers plans des deux premières parties (114a, 124a) de bord sont au moins à peu près parallèles entre elles et les deux deuxièmes plans des deuxièmes parties (114b, 124b) de bord font un angle entre elles.

9. Dispositif articulé de remplissage suivant la revendication 8,
**caractérisé en ce que** l'angle entre les deux deuxièmes plans des deuxièmes parties (114b, 124b) de bord définissent l'angle total de pivotement de la deuxième partie (120) tubulaire de remplissage par rapport à la première partie (110) tubulaire de remplissage.

10. Dispositif articulé de remplissage suivant l'une des revendications 1 à 9,
**caractérisé en ce qu'**il est prévu une articulation tournante dont l'axe (140) est de préférence sensiblement perpendiculaire au troisième axe (C) de la troisième partie (132) tubulaire de remplissage.
